# EUROPEAN PATENT APPLICATION

(11) **EP 1 835 497 A2**
(43) Date of publication of application: **19.09.2007**
(21) Application number: 06017010.7
(22) Date of filing: 16.08.2006
(51) Int. Cl.: G11B 7/24, G11B 20/00

(54) **A read-oncerecord medium and a system with read protecting function**

(30) Priority: 13.03.2006 US 373314
(71) Applicant: Sham, Wellen, Taipei T'ai pei 11161 (TW)
(72) Inventor: Sham, Wellen, Taipei T'ai pei 11161 (TW)
(74) Representative: Helms, Joachim

(57) **Abstract**

The present invention relates to a read-once record medium (10), comprising: a data substrate (11), having control data zone (111) and a data zone (112), and said having pre-record data; a sensitive layer (12), disposed above said data substrate; a refractive layer (13), disposed above said sensitive layer; an adhesive layer (14), disposed above said refractive layer; and a transparent substrate (15), disposed above said adhesive layer; thereby, the structure of said sensitive layer or said data substrate will be changed when laser beams with specified power emitted from an optical storage device pass through the data substrate and focus on the sensitive layer, and the laser beams will be reflected by the sensitive layer and can not be recognized by the optical storage device. Furthermore, the present invention also provides a system with read protecting function.

## Description

### BACKGROUND OF THE INVENTION

### Field of the Invention

The present invention relates to a read-once record medium, and more particularly to a record medium with a sensitive layer, and the record medium has a control code in its control data zone, when the record medium is loaded into an optical storage device, the structure of the sensitive layer or the data substrate will be changed (or destroyed) when laser beams with specified power emitted from an optical storage device pass through the data substrate and focus on the sensitive layer, and the laser beams will be reflected by the sensitive layer and can not be recognized by the optical storage device; furthermore, the present invention also provides a system with read protecting function.

### Description of the Related Art

In general, audio and video files can be downloaded from a server and played in a DVD or CD player by means of a simple security check according to a prior art. However, the security check may be skipped by users, and thus DVD or CD publishers cannot request users to pay for the downloaded files and thus the unauthorized use of DVD or CD media becomes more and more.

At present, there are systems or solutions that can solve the problem of protecting DVD or CD from unauthorized copying. For example, U.S. Pat. No. 5,991,403 issued to Aucsmith, et al disclosed a method for encoding MPEG compatible video data for subsequent compression that comprises detecting a plurality of frames of video data organized as a GOP, generating an encryption key for the GOP, and encrypting the video data using GOP-synchronized substitution, transposition, and rotation transformations that are parameterized by offsets derived from the generated encryption key.

U.S. Pat. No. 5,915,018 issued to Aucsmith, et al disclosed a cryptographic system and method for secure distribution and management of cryptographic keys for use in a DVD copy protection scheme. A DVD disc having compressed, encrypted content written on a first portion of the disc, and the content encryption key, itself encrypted with a second key and written out of band on a second portion of the disc is used to provide content, key, and control information to a DVD player.

U.S. Pat. No. 5,991,403 is used for coding MPEG compatible video data for subsequent compression, and U.S. Pat. No. 5,915,018 is a cryptographic system and method for secure distribution and management of cryptographic keys for use in a DVD copy protection scheme. However, these patented technologies all used the encryption key or cryptographic key to manage the data encrypting or decrypting of the CD or DVD. But the structure of the encryption key or cryptographic key was relative complex, furthermore, the U.S. Pat. No. 5,915,018 needed to pay more royalty fee to the publishers, filmmakers or computer companies, so as to increased the cost of the CDs or DVDs, therefore, the sale price of the CDs or DVDs could not be reduced.

### Summary of the Invention

Therefore, it is a primary objective of the present invention to overcome the foregoing shortcomings of the prior art by providing a read-once record medium with a sensitive layer, when the record medium is loaded into an optical storage device, the structure of the sensitive layer or the data substrate will be changed (or destroyed) when laser beams with specified power emitted from an optical storage device pass through the data substrate and focus on the sensitive layer, and the laser beams will be reflected by the sensitive layer and can not be recognized by the optical storage device.

Another objective of the present invention is to overcome the foregoing shortcomings of the prior art by providing a read-once record medium, which has a control code in its control data zone for being identified by an optical storage device, so as to achieve the goals of read protecting and prevent from illegally copying.

Another objective of the present invention is to overcome the foregoing shortcomings of the prior art by providing a system with read protecting function, which comprises a record medium, having a control data zone and a data zone with encoded data therein; when the record medium is loaded into an optical storage device, the optical storage device will read and identify the control code; then the optical storage device will decode the control code and output the decoded data if the control code is identifiable; or the optical storage device will directly output the encoded data if the control code is not identifiable.

To achieve the foregoing objectives, a system with read protecting function in accordance with the present invention comprises: a data substrate, having control data zone and a data zone, and the having pre-record data; a sensitive layer, disposed above the data substrate; a refractive layer, disposed above the sensitive layer; an adhesive layer, disposed above the refractive layer; and a transparent substrate, disposed above the adhesive layer; thereby, the structure of the sensitive layer or the data substrate will be changed when laser beams with specified power emitted from an optical storage device pass through the data substrate and focus on the sensitive layer, and the laser beams will be reflected by the sensitive layer and can not be recognized by the optical storage device.

### BRIEF DESCRIPTION OF THE DRAWINGS

FIG 1a is a cross-section view of a read-once record medium 10 according to a preferred embodiment of the invention.
FIG 1b is an enlarge view of a record medium 10 according to a preferred embodiment of the invention.
FIG 2 is a block diagram of a system with read protecting function according to one preferred embodiment of the invention.

### DETAILED DESCRIPTION OF THE PREFERRED EMBODIMENTS

So-called a system with read protecting function means that the data therein will be destroyed after being read by an optical storage device, that is, the data of the record medium can not be illegally copied, therefore data of the record medium can be protected. The detail of the system with read protecting function's structure will be described as following.

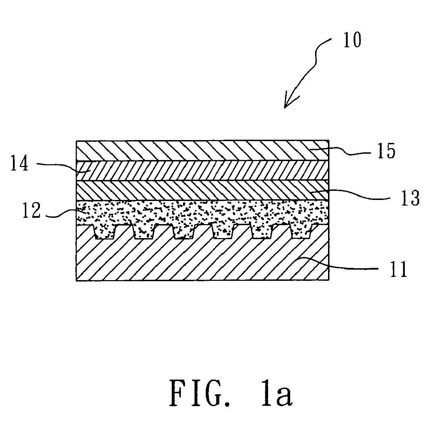

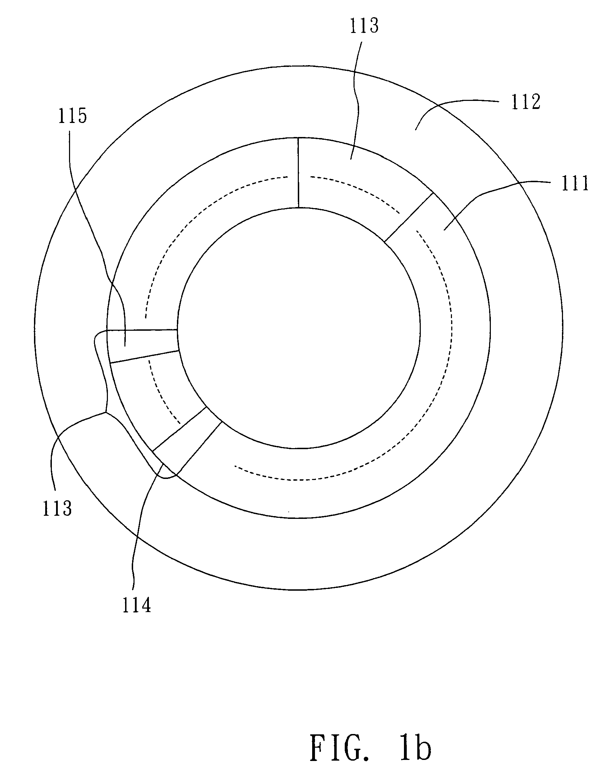

Referring to FIG 1a and 1b, which shows a cross-section view and an enlarge view of a read-once record medium 10, respectively, according to a preferred embodiment of the invention. As shown in the FIG 1a, the read-once record medium 10 of the present invention is for example but not limited to a CD, DVD-ROM, HD DVD-ROM or BD-ROM, which comprises: a data substrate 11, a sensitive layer 12, a refractive layer 13, an adhesive layer 14, and a transparent substrate 15.

Wherein, the data substrate 11 is made of plastic material, for example but not limited to a polycarbonate (PC), and the data substrate 11 further comprises a control data zone 111 and a data zone 112 (please refer to FIG 1b) thereon, and the data zone 112 has pre-record (that is pre-burned) data, for example but not limited to a computer software(s), image data or audio data. Furthermore, the pre-record data were encoded then recorded on the data substrate 11 and the encoding mechanism is for example but not limited to a MPEG-1, MPEG-2, MPEG-4 or Reed-Soloman encoding mechanism.

The sensitive layer 12 is disposed above the data substrate 11 and has sensitivity over light (or beam), and its structure will be changed (or destroyed) when laser beams with specified power emitted from an optical storage device (not shown) pass through the data substrate 11 and focus on it. The sensitive layer 12 can be formed by a spin coating process with an organic dye on the data substrate 11 or by a sputtering coating process with an inorganic alloy material on the data substrate 11, wherein the inorganic ally material is a metal alloy; and the power of the laser beam is more than 1.0 mW.

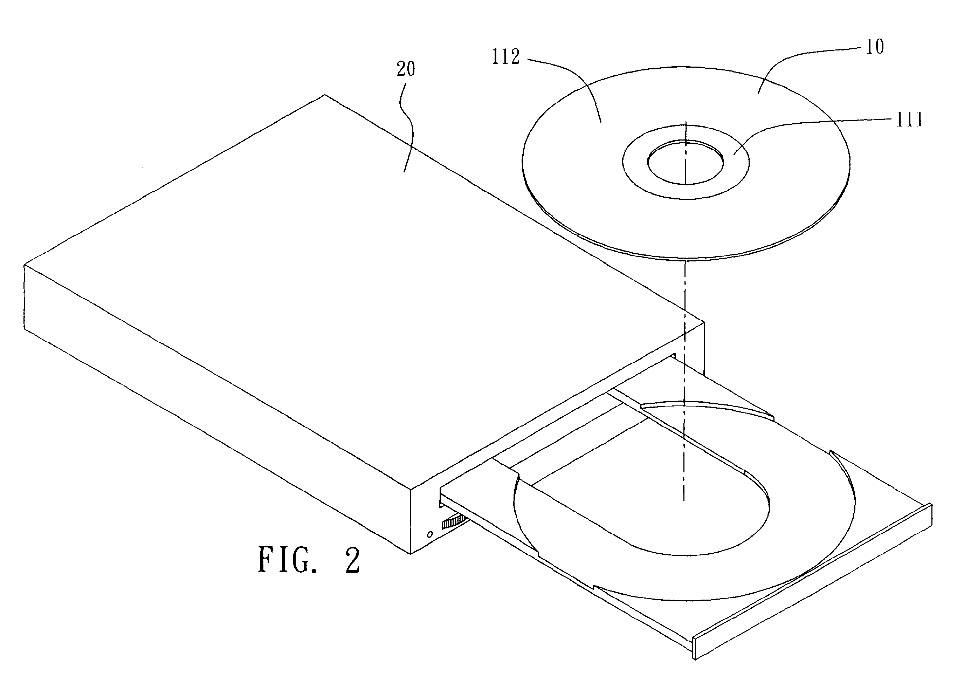

The refractive layer 13 is disposed above the sensitive layer 12 which can refract the laser beams emitted by an optical storage device 20 (please refer to FIG 2) and the refracted laser beams will be recognized by the photo-detector (not shown) of the optical storage device 20. Wherein the refractive layer 13 is for example but not limited to be made of silver or silver alloy, due to it is a prior art, so the description will not in detail discuss this issue.

The adhesive layer 14 is disposed above the refractive layer 13 for adhering the data substrate 11 and the transparent substrate 15.

The transparent substrate 15 is disposed above the adhesive layer 14 and is made of plastic material, for example but not limited to a polycarbonate (PC) for printing or inking picture(s) or word(s) thereon.

While the read-once record medium 10 of the present invention being manufactured, the sensitive layer 12 is disposed above the data substrate 11 and has sensitivity over light (or beam), and the structure of the sensitive layer 12 will be changed (or destroyed) when laser beams with specified power emitted from the optical storage device 20 pass through the data substrate 11 and focus on the sensitive layer 12, and the laser beams will be reflected by the sensitive layer 12 and can not be recognized by the optical storage device 20 due to the structure of the sensitive layer 12 has been destroyed, so as to achieve the goals of read protecting and prevent from illegally copying. Wherein, the reflection ratio, refraction ratio or absorbing ratio of the sensitive layer 12 will be changed when the laser beams pass through the data substrate 11 and focus on the sensitive layer 12, therefore, the laser beams reflected by the sensitive layer 12 can not be recognized by the optical storage device 20.

Therefore, the pre-record data of the record medium 10 will be destroyed and can not be detected by the photo detector of the optical storage device 20 due to the structure of the sensitive layer 12 having been changed after being read once, such that the pre-record data of the record medium 10 can not be copied, therefore the contents provider is willing to reduce the sale price of the CDs or DVDs. Therefore, the read-once record medium 10 of the present invention can overcome the shortcomings of the prior arts.

Furthermore, for enhancing the object of read protecting, the control data zone 111 of the read-once record medium 10 of the present invention further comprises a control code 115 (please refer to FIG 1b), which could be a producing serial number, a random serial number or an authorizing number of the computer software, an image file or an audio file. When the read-once record medium 10 is loaded into the optical storage device 20, the optical storage device 20 could not read the pre-record data if it could not recognize the control code 115; therefore, the goal of read protecting can be reached.

Referring to FIG 2, it shows a block diagram of a system with read protecting function according to one preferred embodiment of the invention. As shown in the FIG, the system with read protecting function of the present invention comprises: a record medium 10 and an optical storage device 20.

Wherein, the record medium 10 is for example but not limited to a CD, DVD-ROM, HD DVD-ROM or BD-ROM, which comprises: a data substrate 11 with a control data zone 111 and a data zone 112 thereon (please refer to FIG 1b); wherein the control data zone 111 has a plurality of blocks 113, for example but not limited to 192 blocks; and every block 113 has a plurality of sectors 114, for example but not limited to 16 sectors; and every sector 14 has a plurality of bytes, for example but not limited to 2K bytes; and the data zone 112 has encoded data, for example but not limited to a computer software, an image file or an audio file; as well as a control code 115 with 4~6bytes length is disposed in one of the sectors 114, for example but not limited to the 0 and 1 sectors. The control code 115 is provided for being identified by the optical storage device 20, and the control code 115 could be a producing serial number, a random serial number or an authorizing number of the computer software, image file or audio file.

The data substrate 11 is made of plastic material, for example but not limited to a polycarbonate (PC).

The optical storage device 20 is for example but not limited to a CD player/recorder or a DVD player/recorder, which could load the record medium 10 and read the control code 115 therein and has a decoding mechanism (not shown) for decoding the encoded data of the data zone 115; wherein, the decoding mechanism of the optical storage device 20 is co-operated with the encoding mechanism of the record medium 10, for example, the encoding mechanism of the record medium 10 is for example but not limited to a MPEG-1, MPEG-2, MPEG-4 or Reed-Soloman encoding mechanism, and the decoding mechanism of the optical storage device 20 is also for example but not limited to a MPEG-1, MPEG-2, MPEG-4 or Reed-Soloman decoding mechanism.

The optical storage device 20 of the present invention is different to the prior art optical storage device, which could emit a general power laser beam for reading and a specified power laser beam. Wherein the power of the general power laser beam is around 0.5 mW for reading the data of the data zone 112. The power of the specified power laser beam is around 1.0 mW for destroying the sensitive layer 12 after reading the data of the data zone 112.

Furthermore, the prior art optical storage device does not only comprise the decoding mechanism for decoding the encoded data of the data zone 112 of the recode medium 10, but also does not check the control code 115 of the control data zone 111.

The optical storage device 20 of the present invention either comprises the decoding mechanism for decoding the encoded data of the data zone 112 of the recode medium 10, or reads and identifies the control code 115 of the control data zone 111 when the recode medium 10 is loaded into the optical storage device 20; such as if the control code 115 has 4~6 bytes length, the producer of the recode medium 10 could write the producing serial number, random serial number or authorizing number of the computer software, image file or audio file into the control data zone 111, and some certain bits with specific pattern of the 48 bits are provided for identifying by the optical storage device 20;if the optical storage device 20 comprises the decoding mechanism then it could read the control code 115 from the control data zone 111; and the optical storage device 20 will read the encoded data and decode the data then output if it could identify the control code 115; or the optical storage device 20 will read the encoded data then directly output if it could not identify the control code 115, thus the user will see a screen with non-decoded data. Therefore, by way of combining the record medium 10 and optical storage device 20 provided by the present invention can really achieve the goals of read protecting and prevent illegal copying, and the contents provider of the present invention only needs to pay a less royalty fee to the publishers, filmmakers or computer companies; for this reason the contents provider is willing to reduce the sale price of the CDs or DVDs; therefore, the system with read protecting function of the present invention can overcome the shortcomings of the prior arts.

Furthermore, for enhancing the object of read protecting, the read-once record medium 10 of the present invention further comprises a sensitive layer 12 (please refer to FIG 1), which is disposed above the data substrate 11, and can be formed by a spin coating process with an organic dye on the data substrate 11 or by a sputting coating process with an inorganic alloy material on the data substrate 11; its structure will be changed (or destroyed) when laser beams with specified power emitted from the optical storage device 20 pass through the data substrate 11 and focus on it; and the laser beams reflected by the sensitive layer 12 can not be recognized by the optical storage device 20. Therefore, the goal of read protecting can be reached; wherein, the reflection ratio, refraction ratio or absorbing ratio of the sensitive layer 12 will be changed when the laser beams pass through the data substrate 11 and focus on it; and the power of the laser beam is more than 1.0 mW.

With the implementation of the present invention, the record medium with a sensitive layer, and the record medium has a control code in its control data zone, when the record medium is loaded into an optical storage device, the structure of the sensitive layer or the data substrate will be changed (or destroyed) when laser beams with specified power emitted from an optical storage device pass through the data substrate and focus on the sensitive layer, and the laser beams will be reflected by the sensitive layer and can not be recognized by the optical storage device. Therefore, the present invention definitely can overcome the prior art apparatus for preventing unauthorized copying.

While the invention has been described by way of example and in terms of a preferred embodiment, it is to be understood that the invention is not limited thereto. To the contrary, it is intended to cover various modifications and similar arrangements and procedures, and the scope of the appended claims therefore should be accorded the broadest interpretation so as to encompass all such modifications and similar arrangements and procedures.

In summation of the above description, the present invention herein enhances the performance than the conventional structure and further complies with the patent application requirements and is submitted to the Patent and Trademark Office for review and granting of the commensurate patent rights.

## Claims

1. A read-once record medium, comprising:
a data substrate, having control data zone and a data zone, and said having
pre-record data;
a sensitive layer, disposed above said data substrate;
a refractive layer, disposed above said sensitive layer;
an adhesive layer, disposed above said refractive layer; and
a transparent substrate, disposed above said adhesive layer;
thereby, the structure of said sensitive layer or said data substrate will be changed when laser beams with specified power emitted from an optical storage device pass through said data substrate and focus on said sensitive layer, and said laser beams will be reflected by said sensitive layer and can not be recognized by said optical storage device.

2. The read-once record medium of claim 1, wherein said data substrate and said transparent substrate are made of plastic material, and said plastic material is a polycarbonate.

3. The read-once record medium of claim 1, wherein said sensitive layer is formed by a spin coating process with an organic dye on said data substrate or a sputtering coating process with an inorganic alloy material on said data substrate.

4. The read-once record medium of claim 1, wherein said power of said laser beam is more than 1.0 mW, and said record medium is a CD, DVD-ROM, HD DVD-ROM or BD-ROM.

5. The read-once record medium of claim 1, wherein said reflection ratio, refraction ratio or absorbing ratio of said sensitive layer will be changed when said laser beams pass through said data substrate and focus on said sensitive layer.

6. The read-once record medium of claim 1, wherein said control data zone further comprises a control code, and said control code is a producing serial number, a random serial number or an authorizing number.

7. The read-once record medium of claim 6, wherein said encoding mechanism of said pre-record data are encoded then written into said data zone; and said encoded mechanism is a MPEG-1, MPEG-2, MPEG-4 or Reed-Soloman encoding mechanism.

8. A system with read protecting function, comprising:
a record medium, having a data substrate with a control data zone and a data zone thereon, wherein said data zone has pre-record data, and said control data zone has a control code; and
an optical storage device, having a decoding mechanism for loading said record medium and reading and identifying said control code, then decoding said control code and outputs said decoded data if said control code is identifiable; or directly output said encoded data if said control code is not identifiable.

9. The system with read protecting function of claim 8, wherein said data substrate and said transparent substrate are made of plastic material, and said plastic material is a polycarbonate.

10. The system with read protecting function of claim 8, wherein said control data zone has 192 blocks, and every block has 32K bytes that are divided into 16 sectors, so every sector has 2K bytes, and said control code has 4~6 bytes, and said control code is a producing serial number, a random serial number or an authorizing number.

11. The system with read protecting function of claim 8, wherein said record medium is a CD, DVD-ROM, HD DVD-ROM or BD-ROM, and said optical storage device is a CD player/ recorder or a DVD player/ recorder.

12. The system with read protecting function of claim 8, wherein said encoding mechanism of said record medium is a MPEG-1, MPEG-2, MPEG-4 or Reed-Soloman encoding mechanism, and said decoding mechanism of said optical storage device is a MPEG-1, MPEG-2, MPEG-4 or Reed-Soloman decoding mechanism.

13. The system with read protecting function of claim 8, wherein said record medium further comprises a sensitive layer, which is disposed above said data substrate, and said sensitive layer is formed by a spin coating process with an organic dye on said data substrate or a sputtering coating process with an inorganic alloy material on said data substrate, and the structure of said sensitive layer will be changed when laser beams with specified power emitted from said optical storage device pass through said data substrate and focus on said sensitive layer, and said laser beams will be reflected by said sensitive layer and can not be recognized by said optical storage device.

14. The system with read protecting function of claim 13, wherein said reflection ratio, refraction ratio or absorbing ratio of said sensitive layer will be changed when said laser beams pass through said data substrate and focus on said sensitive layer; and said power of said laser beam is more than 1.0 mW.
